# EUROPEAN PATENT APPLICATION

(11) **EP 4 654 011 A1**
(43) Date of publication of application: **26.11.2025**
(21) Application number: 24847508.9
(22) Date of filing: 24.01.2024
(51) Int. Cl.: G06F 9/48

(54) **DATABASE THREAD POOL CONTROL METHOD AND APPARATUS, ELECTRONIC DEVICE, AND COMPUTER MEDIUM**

(30) Priority: 28.07.2023 CN 202310942845
(71) Applicant: Jingdong Technology Information Technology Co., Ltd., Beijing 100176 (CN)
(72) Inventor: MENG, Xiangbin, Beijing 100176 (CN)
(74) Representative: Böckmann genannt Dallmeyer, Georg Nikolas
(86) International application number: PCT/CN2024/073741
(87) International publication number: WO 2025/025539

(57) **Abstract**

The present disclosure provides a database thread pool control method and apparatus. A specific implementation of the method comprises: loading a dynamic runtime library capable of replacing a thread with a coroutine in an operating system of a database to generate at least one coroutine scheduling thread; receiving a request for connection sent by a client to the database; detecting whether a request for creating a new thread in the database is a request for processing the request for connection; and in response to detecting that the request for creating a new thread in the database is a request for processing the request for connection, creating a coroutine corresponding to the request for connection, and scheduling the coroutine with the at least one coroutine scheduling thread to complete an access task corresponding to the request for connection.

## Description

### CROSS-REFERENCE TO RELATED APPLICATIONS

The present application claims priority to Chinese Patent Application No. 202310942845.1, which was filed on July 28, 2023 and entitled "Database Thread Pool Control Method and Apparatus, Electronic Device, and Computer Medium", the content of which is hereby incorporated by reference in its entirety.

### TECHNICAL FIELD

The present disclosure relates to the field of computer technology, and specifically to a database thread pool control method and apparatus, an electronic device, and a computer-readable medium.

### BACKGROUND

The default concurrent connection model of the MySQL database adopts "one thread one connection", that is, a thread is created for each connection. A major drawback of the database is that in high-concurrency scenarios, frequent creation/destruction of threads will cause the database to freeze or crash. In addition, even if the long connection mode is used, a large number of threads will greatly increase the task scheduling burden.

### SUMMARY

The embodiments of the present disclosure provide a database thread pool control method and device, an electronic device, and a computer-readable medium.

In the first aspect, the embodiment of the disclosure provides a database thread pool control method comprising: loading a dynamic runtime library capable of replacing a thread with a coroutine in an operating system of a database to generate at least one coroutine scheduling thread, the coroutine scheduling thread being for scheduling at least one coroutine; receiving a request for connection sent by a client to the database; detecting whether a request for creating a new thread in the database is a request for processing the request for connection; and in response to detecting that the request for creating a new thread in the database is a request for processing the request for connection, creating a coroutine corresponding to the request for connection, and scheduling the coroutine with the at least one coroutine scheduling thread to complete an access task corresponding to the request for connection

In some embodiments, the loading a dynamic runtime library capable of replacing a thread with a coroutine in an operating system of a database to generate at least one coroutine scheduling thread comprises: in response to the database being unable to modify a source code and not having a connection control plugin mechanism, starting the database; loading and initializing a dynamic runtime library to generate at least one coroutine scheduling thread, the dynamic runtime library having a hook function for creating a thread, the hook function for creating a thread is used to replace a connection processing thread generated by a native runtime library of the database with the coroutine; and when the database is initialized, reloading the hook function for creating a thread, to determine whether a currently created thread is a connection processing thread with the hook function for creating a thread, and when the currently created thread is a connection processing thread, converting the connection processing thread into a coroutine.

In some embodiments, the loading a dynamic runtime library capable of replacing a thread with a coroutine in an operating system of a database to generate at least one coroutine scheduling thread comprises: in response to the database having a connection control plugin mechanism, starting the database; loading and initializing the dynamic runtime library to generate at least one coroutine scheduling thread; initializing the database; loading and initializing a plugin to make the plugin receive a request for connection sent to the database, and when a thread construction request of the database is a request for processing the request for connection, controlling the hook function for creating a thread in the dynamic runtime library to work, the hook function for creating a thread being for determining whether a currently created thread is a connection processing thread, and when the currently created thread is a connection processing thread, converting the connection processing thread into a coroutine.

In some embodiments, the method further comprises: dividing the at least one coroutine scheduling thread into an IO-intensive scheduling thread and a computation-intensive scheduling thread; wherein the scheduling the coroutine with the at least one coroutine scheduling thread to complete an access task corresponding to the request for connection comprises: detecting whether the coroutine corresponding to the request for connection is in a state between a first state and a second state, the first state being a state in which the coroutine is waiting for a data packet that has arrived to execute a database command, and the coroutine needs to be awakened, and the second state being a state in which the coroutine is in the computation-intensive scheduling thread and the coroutine initiates a specific write request to a specific file; if it is detected that the coroutine corresponding to the request for connection is in a state between the first state and the second state, scheduling the coroutine corresponding to the request for connection with the computation-intensive scheduling thread in the at least one coroutine scheduling thread; and if it is detected that the coroutine corresponding to the request for connection is not in a state between the first state and the second state, scheduling the coroutine corresponding to the request for connection with the IO-intensive scheduling thread in the at least one coroutine scheduling thread.

In some embodiments, if it is detected that the coroutine corresponding to the request for connection is not in a state between the first state and the second state, scheduling the coroutine corresponding to the request for connection with the IO-intensive scheduling thread in the at least one coroutine scheduling thread comprises: in response to the coroutine corresponding to the request for connection being in a stage of creating a connection, placing the coroutine in the current IO-intensive scheduling thread, the current IO-intensive scheduling thread being determined based on a load balancing algorithm; and in response to the coroutine corresponding to the request for connection being in a specific write operation to a specific file, and before completing a commit of a write specific file IO request and yielding the coroutine to enter into an IO wait, migrating the coroutine to the current IO-intensive scheduling thread.

In some embodiments, the database is a MySQL database, and in response to the coroutine corresponding to the request for connection being in a specific write operation to a specific file, and before completing the commit of a write specific file IO request and yielding the coroutine to enter into an IO wait, the migrating the coroutine to the current IO-intensive scheduling thread, comprises: in response to the coroutine corresponding to the request for connection being in a write operation to a binary log file, and before completing the commit of a write file IO request and yielding the coroutine to enter into an IO wait, migrating the coroutine to the current IO-intensive scheduling thread.

In some embodiments, the method further comprising: detecting whether there is a coroutine for driving batch commit in the IO-intensive scheduling thread; and if there is a coroutine for driving batch commit in the IO-intensive scheduling thread, migrating the coroutine awakened by the coroutine for driving batch commit to the IO-intensive scheduling thread, the IO-intensive scheduling thread to which the coroutine awakened by the coroutine for driving batch commit is migrated being determined based on a load balancing algorithm.

In some embodiments, the database is a MySQL and a database in which a group commit is started, and the detecting whether there is a coroutine for driving batch commit in the IO-intensive scheduling thread comprises: detecting whether the IO-intensive scheduling thread has a group leader coroutine driving a group commit process for a write operation to the binary log file; and wherein if there is a coroutine for driving batch commit in the IO-intensive scheduling thread, migrating the coroutine awakened by the coroutine for driving batch commit to the IO-intensive scheduling thread comprises: if it is detected that there is a group leader coroutine for a write operation to the binary log file, migrating a group member coroutine awakened by the group leader coroutine to the IO-intensive scheduling thread, the IO-intensive scheduling thread to which each group member coroutine is migrated being determined based on the load balancing algorithm.

On the second aspect, the embodiments of the disclosure provides database thread pool control apparatus comprising: a loading unit configured to la dynamic runtime library capable of replacing a thread with a coroutine in an operating system of a database to generate at least one coroutine scheduling thread, the coroutine scheduling thread being for scheduling at least one coroutine; a receiving unit configured to a request for connection sent by a client to the database; a detecting unit configured to detect whether a request for creating a new thread in the database is a request for processing the request for connection; and a creating unit configured to, in response to detecting that the request for creating a new thread in the database is a request for processing the request for connection, create a coroutine corresponding to the request for connection, and schedule the coroutine with the at least one coroutine scheduling thread to complete an access task corresponding to the request for connection.

In some embodiments, the loading unit is further configured to: in response to the database being unable to modify a source code and not having a connection control plugin mechanism, start the database; load and initialize a dynamic runtime library to generate at least one coroutine scheduling thread, the dynamic runtime library having a hook function for creating a thread, the hook function for creating a thread is used to replace a connection processing thread generated by a native runtime library of the database with the coroutine; and when the database is initialized, reload the hook function for creating a thread, to determine whether a currently created thread is a connection processing thread with the hook function for creating a thread, and when the currently created thread is a connection processing thread, convert the connection processing thread into a coroutine.

In some embodiments, the loading unit is further configured to: in response to the database having a connection control plugin mechanism, start the database; load and initialize the dynamic runtime library to generate at least one coroutine scheduling thread; initialize the database; load and initialize a plugin to make the plugin receive a request for connection sent to the database, and when a thread construction request of the database is a request for processing the request for connection, control the hook function for creating a thread in the dynamic runtime library to work, the hook function for creating a thread being for determining whether a currently created thread is a connection processing thread, and when the currently created thread is a connection processing thread, convert the connection processing thread into a coroutine.

In some embodiments, the apparatus further comprises: a dividing unit configured to divide the at least one coroutine scheduling thread into an IO-intensive scheduling thread and a computation-intensive scheduling thread; wherein the creating unit is further configured to: determine whether the coroutine corresponding to the request for connection is in a state between a first state and a second state, the first state being a state in which the coroutine is waiting for a data packet that has arrived to execute a database command, and the coroutine needs to be awakened, and the second state being a state in which the coroutine is in the computation-intensive scheduling thread and the coroutine initiates a specific write request to a specific file; if it is detected that the coroutine corresponding to the request for connection is in a state between the first state and the second state, schedule the coroutine corresponding to the request for connection with the computation-intensive scheduling thread in the at least one coroutine scheduling thread; and if it is detected that the coroutine corresponding to the request for connection is not in a state between the first state and the second state, schedule the coroutine corresponding to the request for connection with the IO-intensive scheduling thread in the at least one coroutine scheduling thread.

In some embodiments, the creating unit is further configured to: in response to the coroutine corresponding to the request for connection being in a stage of creating a connection, placing the coroutine in the current IO-intensive scheduling thread, the current IO-intensive scheduling thread being determined based on a load balancing algorithm; and in response to the coroutine corresponding to the request for connection being in a specific write operation to a specific file, and before completing a commit of a write specific file IO request and yielding the coroutine to enter into an IO wait, migrating the coroutine to the current IO-intensive scheduling thread.

In some embodiments, the database is a MySQL database, and the creating unit is further configured to: in response to the coroutine corresponding to the request for connection being in a write operation to a binary log file, and before completing the commit of a write file IO request and yielding the coroutine to enter into an IO wait, migrate the coroutine to the current IO-intensive scheduling thread.

In some embodiments, the apparatus further comprises: a batch drive unit configured to detect whether there is a coroutine for driving batch commit in the IO-intensive scheduling thread; and if there is a coroutine for driving batch commit in the IO-intensive scheduling thread, migrate the coroutine awakened by the coroutine for driving batch commit to the IO-intensive scheduling thread, the IO-intensive scheduling thread to which the coroutine awakened by the coroutine for driving batch commit is migrated being determined based on a load balancing algorithm.

In some embodiments, the database is a MySQL and a database in which a group commit is started, and the batch drive unit is further configured to: detect whether the IO-intensive scheduling thread has a group leader coroutine driving a group commit process for a write operation to the binary log file; if it is detected that there is a group leader coroutine for a write operation to the binary log file, migrate a group member coroutine awakened by the group leader coroutine to the 10-intensive scheduling thread, the IO-intensive scheduling thread to which each group member coroutine is migrated being determined based on the load balancing algorithm.

In the third aspect, the embodiments of the disclosure discloses an electronic device, comprising: one or more processors; a storage device, on which one or more computer programs are stored, wherein the one or more computer programs, when executed by the one or more processors, cause the one or more processors to implement the method as depicted in any embodiment in the first aspect.

In the fourth aspect, the embodiments of the disclosure discloses a non-transitory computer-readable medium, on which a computer program is stored, wherein the computer program, when executed by a processor, implements the method as depicted in any embodiment in the first aspect.

### BRIEF DESCRIPTION OF DRAWINGS

Other features, purposes and advantages of the present disclosure will become more apparent by reading the detailed description of the non-limiting embodiments made with reference to the following figures:
FIG. 1 is a flow chart of an embodiment of a database thread pool control method according to the present disclosure;
FIG. 2 is a schematic diagram of a database structure of the present disclosure;
FIG. 3 is a flow chart of another embodiment of a database thread pool control method according to the present disclosure;
FIG. 4 is a schematic diagram of the structure of an embodiment of a database thread pool control apparatus according to the present disclosure;
FIG. 5 is a schematic diagram of the structure of an electronic device suitable for implementing an embodiment of the present disclosure.

### DETAILED DESCRIPTION

The present disclosure is further described in detail below in conjunction with the accompanying drawings and embodiments. It is understood that the specific embodiments described herein are only used to explain the relevant inventions, rather than to limit the inventions. It should also be noted that, for ease of description, only the parts related to the relevant inventions are shown in the accompanying drawings.

It should be noted that the embodiments and features in the embodiments of the present disclosure can be combined with each other without conflict. The present disclosure will be described in detail below with reference to the accompanying drawings in combination with the embodiments.

In traditional database technology, Percona has introduced a thread pool solution, which effectively controls the number of threads and reduces thread switching by executing SQL (Structured Query Language) instructions in different connections in the thread pool in a time-sharing manner, thereby ensuring the performance and stability of the system to a certain extent.

When the thread pool is started, the connection at the client will be placed in different priority queues according to the setting of the task priority strategy and the type of SQL instruction to be executed. When there are tasks in the high priority queue, the tasks in the low priority queue will not be executed.

In general, when there are tasks to be executed in the task queue but there are no idle worker threads, new worker threads will be started to schedule these tasks. The number of worker threads will not exceed the upper limit specified by the thread pool; the parameter "thread_pool_max_threads" sets the maximum number of threads allowed to be created by the entire thread pool; when a worker thread is idle for more than the time set by the "thread_pool_idle_timeout" parameter, it will automatically exit.

However, if the execution time of the tasks being scheduled is generally long, and at the same time the number of worker threads has reached the upper limit; then the tasks in the task queue will not be scheduled for execution for a long time. Another similar situation is that when a large number of tasks continue to flow into the high-priority task queue, the tasks in the low-priority queue will also not be executed for a long time. This situation is a common phenomenon in concurrent task scheduling and is figuratively called task "starvation".

In the existing database thread pool technology, MySQL's thread pool has a "starvation" problem. To alleviate "starvation", it is necessary to relax the limit on the number of over-limit threads or create connections through "extra ports". However, if over-limit threads and extra ports are used excessively, the so-called "thread number upper limit" limit of the thread pool will become meaningless. Therefore, the database thread pool implementation in the existing public technology generally has the dilemma of "starvation" and uncontrolled upper limit of the number of threads. Even if the number of thread pools is not limited, the timeout response mechanism controlled by the "thread_pool_stall_limit" parameter (default 10ms) will extend a SQL that originally only takes a few microseconds to more than 10ms (triggering the situation of timeout and using overlimit threads), thereby causing severe jitter in the SQL response speed.

The core problem of the above-mentioned "starvation" phenomenon is actually that a SQL that runs for a long time, or in a waiting state for a long time (such as thread suspension caused by lock waiting), cannot be swapped out from the thread currently running this SQL before this SQL is executed. In other words, even if the worker thread is in a suspended (lock waiting) state during the execution of a certain SQL, it cannot reuse this thread to schedule the execution of other SQL tasks; if it is desired to execute other SQLs at the same time, only other threads can be used.

In order to better understand traditional technologies, some terms are introduced below:
MariaDB: One of the most popular open source relational databases. It can be regarded as a branch of MySQL database. It was created by the original developers of MySQL and is guaranteed to remain open source forever.
Percona: An open source relational database. Percona's thread pool is based on the transplantation of MariaDB thread pool source code, and has enhanced the function and optimized the performance of the thread pool.
Thread pool: As the name suggests, a pool (container) into which several executable threads created in advance are put. When a task needs to be executed, no new thread is created for this task, but the threads that have been created in the thread pool are used. With the above solution, the number of thread creation and destruction is reduced, the scheduling burden is reduced, and the system performance is improved.
binlog: binlog is a binary format log file used to record the history of user update operations on the database. It is often used to implement incremental replication under the master-slave architecture of the database, wherein the master library continuously generates binlog logs and synchronizes the incremental part to the slave library; and the slave library continuously applies these logs to achieve the purpose of master-slave consistency.
Semi-sync: Semi-synchronous replication is a master-slave replication mode of MySQL. Its performance and reliability are between full synchronous replication and full asynchronous replication. Unlike full synchronous replication, semi-sync does not pursue real-time consistency of data visibility between the master and the slave, but only ensures that there will be no log loss between the master and the slave (that is, to ensure the final consistency of data visibility between the master and the slave). By weakening the consistency requirement, the purpose of improving the performance of master-slave replication is achieved.
Relay log: In the master-slave synchronization solution of the database based on binlog, the slave library (i.e., the binlog receiver) can achieve asynchronous log reception and application through a strategy called "relay log". When the slave library receives the binlog sent by the master library, it can land the log stream into a local file; and the background log application thread can realize asynchronous log application by continuously reading these local log files. The local log file generated by the above slave library is called a "relay log".
Group commit: The database needs to write logs when performing a commit operation, and the log files need to be written serially. In the scenario of large-scale concurrent writing, if each transaction writes a log once, the actual writing speed will be slowed down to the speed of serial writing of the log file. Group commit is a performance optimization solution for the above problem. When there is a large number of concurrent writes, the logs of multiple transactions that are committed almost at the same time can be merged, so that this group of transactions only needs one log write, thereby improving concurrency performance. In MySQL, each binlog group commit will select the transaction with the smallest transaction number in the group as the group leader, and this group leader is responsible for driving the entire commit process.

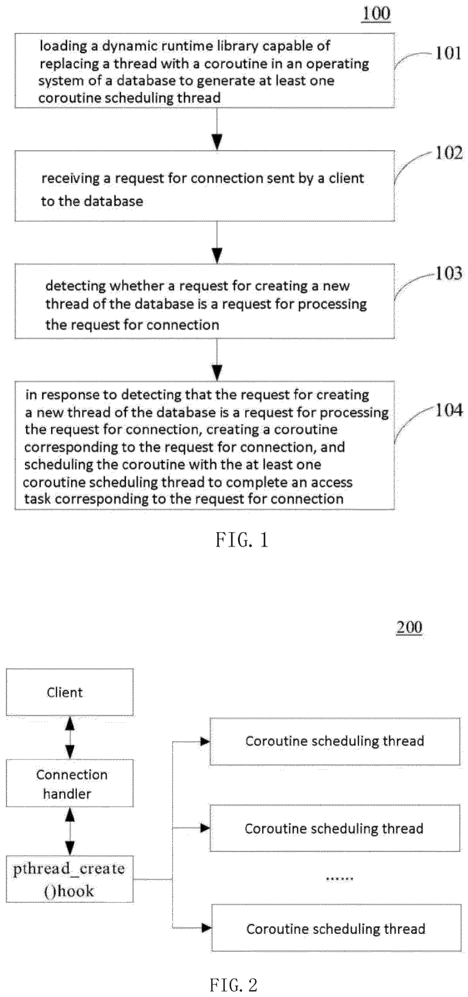

The present disclosure provides a database thread pool control method. Through dynamic runtime library injection, the connection processing thread in the database can be transparently replaced with a coroutine without the database being aware of it. This can ensure that the number of threads executing requests for connection will not exceed the number of scheduled threads, thereby improving the concurrency performance of the database thread pool. As shown in FIG.1, process 100 of an embodiment of the database thread pool control method according to the present disclosure is shown. The database thread pool control method comprises the following steps:
Step 101 of loading a dynamic runtime library capable of replacing a thread with a coroutine in an operating system of a database to generate at least one coroutine scheduling thread.

In the embodiment, the at least one coroutine scheduling thread is for scheduling at least one coroutine.

In the embodiment, the dynamic runtime library is a runtime library that supports database operation and can provide a programming interface for the interaction between the database and the operating system during operation.

In the embodiment, the dynamic runtime library is a dynamic runtime library, and the compiled functions are stored in the dynamic runtime library. The dynamic runtime library provides an API interface to the database through the function, and the database calls the function in the dynamic runtime library through the API interface. On the basis of the native runtime library, the dynamic runtime library can be obtained by hooking the library functions related to thread scheduling in the native runtime library, and the obtained dynamic runtime library after loaded can have the scheduling capability equivalent to that of the thread.

In the embodiment, the C runtime library can be hooked in an all-round way to obtain a dynamic runtime library that provides runtime virtualization environment, in which the database runs to achieve the purpose of simulating the thread executed in the native runtime library in a coroutine manner, simulating the thread with a coroutine, and scheduling the coroutine with a coroutine scheduling thread.

In the embodiment, loading the dynamic runtime library means dynamically injecting the dynamic runtime library into the database when the operating system starts the database. Runtime injection of dynamic runtime library means loading a dynamic runtime library before the operating system starts a database and loads the program into the memory, and running the initialization code in the dynamic runtime library. In this program loading manner, the pre-loaded dynamic runtime library has the opportunity to construct a runtime virtualization environment in advance. In this runtime virtualization environment, the database or operating system can call the functions in the dynamic runtime library in real time. In the embodiment, after the database is started, the coroutine scheduling thread can be started accordingly.

In the embodiment, the coroutine scheduling thread comprises: a scheduler, and a lock-free queue for placing at least one coroutine. The coroutine scheduling thread scheduling at least one coroutine comprises the specific steps of: the scheduler obtaining a coroutine in a ready state from at least one coroutine of the lock-free queue; synchronizing a coroutine context of the coroutine with the thread context in the thread control block; after the coroutine actively yields, the scheduler obtaining a next coroutine in a ready state from the lock-free queue, and synchronizing the coroutine context of a next coroutine with the thread context in the thread control block; after the next coroutine actively yields, the scheduler continuing to obtain coroutines from the lock-free queue and synchronize the thread control block until there is no coroutine in the lock-free queue.

In the embodiment, the thread control block is a data structure of a thread in the native runtime library, called a Thread Control Block (TCB for short), that is, a thread context structure. Dtv and specific array are data structures for storing TLS data in TCB. Dtv: used to store TLS variables defined in the encoding stage. This data will increase as the database loads a new dynamic runtime library, because there may also be TLS variables in the dynamic runtime library.
specific: dynamically created TLS (wherein the library functions for creating and deleting TLS keys are: pthread_key_create and pthread_key_delete; and the library functions for reading and modifying TLS values are: pthread_getspecifix and pthread_setspecific). This type of TLS is maintained by a set of pointer arrays (specific arrays), so there is an upper limit on the number (Linux supports the creation of up to 1024 dynamic TLS).

In the embodiment, when the source code of the database is open source code, the dynamic runtime library is obtained by directly modifying and recompiling the source code of the database. After loading the dynamic runtime library, the database can be run in a new virtualization environment. Optionally, when the database supports plugin development, the plugin interface of the plugin can be used to implement the connection response. When the connection control plugin responds to the new connection, it calls the hook function for creating the coroutine to achieve the purpose of converting the connection thread to a coroutine, wherein the hook function for creating the coroutine is injected when the database is started, and the timing of loading the plugin can be at any stage desired by the user.

Step 102 of receiving a request for connection sent by a client to the database.

In the embodiment, the request for connection is a request for connection sent by the client to the database after the dynamic runtime library is running.

In the embodiment, for separating the coroutine scheduling thread from other background threads of the database, when the dynamic runtime library is mounted during the database startup phase, it is necessary to set a default thread creating mode through the environment variable and set the default behavior to start the system native thread.

Step 103 of detecting whether a request for creating a new thread in the database is a request for processing the request for connection.

In the embodiment, after loading the dynamic runtime library, the program of the hook function in the dynamic runtime library directly replaces the connection handler in the database. The operation of the hook function can directly convert the newly created connection processing thread (session) of the database into a coroutine. When the dynamic runtime library is loaded in the form of a plugin, the connection processing program is replaced by mounting the thread pool plugin, and after the thread pool plugin replaces the connection handler, the newly created connection processing thread of the data is directly converted into a coroutine by the thread pool plugin. When uninstalling the thread pool plugin, it is necessary to ensure that all coroutine-based connection processing threads are closed, otherwise the error of "plugin resource busy" will be reported.

In the embodiment, the request for creating a new thread is a request for creating a thread issued by the database. After receiving the request for connection from the client, the database will create a corresponding connection processing thread for each client connection, and the request for creating a connection processing thread is a request for creating a new thread, that is, a request for creating a new thread is issued to the application interface of the dynamic runtime library. The performing subject on which the database thread pool control method of this embodiment runs can construct a connection processing thread after obtaining that the request for creating a new thread is a request for processing the request for connection, and establish a connection with the client through the constructed connection processing thread. Optionally, after obtaining the request for creating a new thread as a request for processing a request for connection, the performing subject may also use the coroutine to replace the constructed connection processing thread, and establish a connection with the client by scheduling the execution of the coroutine through the coroutine scheduling thread.

Step 104 of in response to detecting that the request for creating a new thread in the database is a request for processing the request for connection, creating a coroutine corresponding to the request for connection, and scheduling the coroutine with the at least one coroutine scheduling thread to complete an access task corresponding to the request for connection.

In the embodiment, by dynamic runtime library injection and a coroutine scheduling thread generation, all threads in the database can be completely scheduled by the coroutine scheduling thread. At the same time, by utilizing the coroutine yieldability and the time-sharing multiplexing scheduling thread time slice properties, it can be ensured that the database will not have task "starvation" or response time jitter caused by the inability to schedule tasks for a long time.

In the embodiment, the process of processing a user's connection processing thread (from connection creation to continuous reception and execution of SQL until the connection is closed) is regarded as an access task, and the coroutine created corresponding to the request for connection is the carrier of the task. For a request for connection, coroutines can be continuously created, and the only constant is the coroutine scheduling thread. For this reason, the disclosure needs to schedule the continuously created coroutines through a limited coroutine scheduling thread.

FIG. 2 shows a schematic diagram of the structure of the database of the disclosure. In FIG. 2, a new connection in the database is created in the following manner: after receiving a thread construction request for processing connection, converting the connection processing thread of the database into a coroutine through the HOOK of the library function for creating a thread in the native runtime library (such as the pthread_create() hook in FIG. 2). The generated coroutine can be used to process the connection in the database, and the generated coroutine can be scheduled by multiple coroutine scheduling threads, achieving the effect of a database "thread pool". In the embodiment, the thread construction request for processing connection is a request for creating a new thread for the database to process a request for connection. After the request is approved, the database can create a connection processing thread for processing a client's request for connection, and the connection processing thread is a thread for processing a client's request for connection. Further, through the hook function in the dynamic runtime library, a coroutine that replaces the connection processing thread can be directly constructed after having the thread construction request for processing connection.

In the database thread pool control method provided in the embodiment of the present disclosure, first, loading a dynamic runtime library capable of replacing a thread with a coroutine in an operating system of a database to generate at least one coroutine scheduling thread, the coroutine scheduling thread being for scheduling at least one coroutine; secondly, receiving a request for connection sent by a client to the database; thirdly, detecting whether a request for creating a new thread in the database is a request for processing the request for connection; and finally, in response to detecting that the request for creating a new thread in the database is a request for processing the request for connection, creating a coroutine corresponding to the request for connection, and scheduling the coroutine with the at least one coroutine scheduling thread to complete an access task corresponding to the request for connection. Therefore, the present disclosure transparently replaces the connection processing thread for processing the connection in the database with a coroutine through dynamic runtime library injection, and the created coroutine corresponding to the request for connection runs in the form of time-sharing call. When a time-consuming operation such as suspension and wait occurs in a coroutine, the current coroutine scheduling thread can be actively yielded, and the coroutine scheduling thread can be replaced by another executable coroutine, whereby the problem of increased delay of low-priority tasks and jitter of task response speed can be solved, and the concurrency performance of the database can be improved.

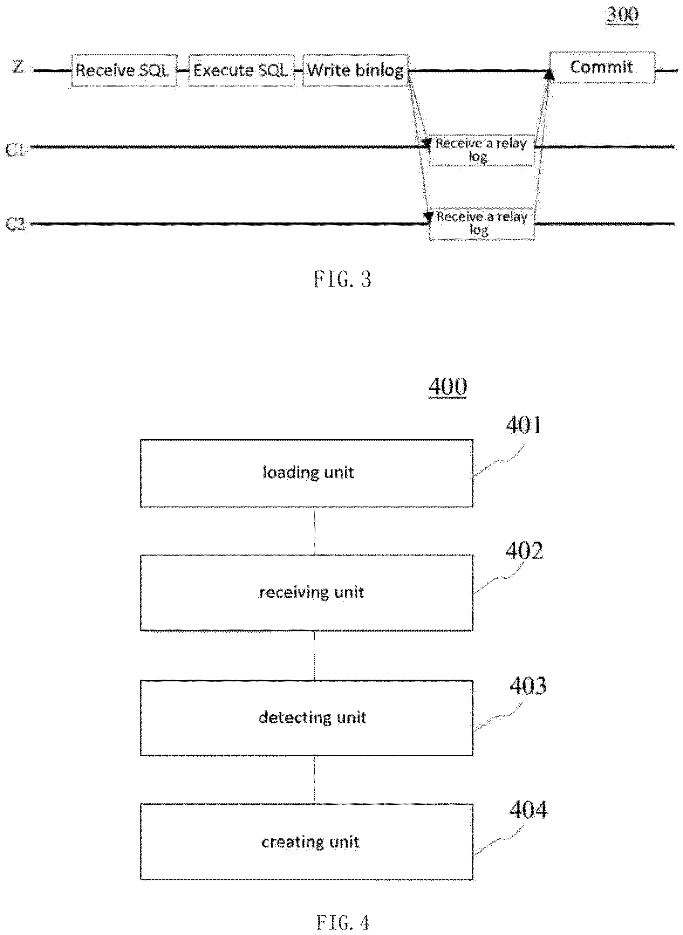

For the above embodiment, by dynamic runtime library injection and running, all connection processing threads of the database can be converted into connection processing coroutines, and the connection processing coroutines are completely scheduled by coroutine scheduling threads, realizing a thread model similar to the thread pool solution through the native runtime library. But there will be two different types of loads when the database is running, which can generally be divided into computing intensive ones and IO intensive ones. As shown in FIG. 3, in a three-node MySQL database cluster with one master (Z) and two slaves (C1, C2) architecture, the time series executed by SQL on the master node includes: receive SQL instructions-> execute SQL instructions-> write modified content into binlog-> synchronize binlog increments to two slave nodes-> complete SQL commit. Currently, most of the deployments of MySQL master-slave replication use MySQL cluster and high availability semi-synchronous mode. In this mode, the process of the master-slave replication stage (when group commit (binlog group commit) is started, the following describes the process of the group leader) steps are as follows:
1) The master database writes the transaction into binlog;
2) The master database transmits the binlog to the slave database;
3) The slave database receives the binlog sent by the master database and writes its content into the relay log (receive the relay log in FIG.3), and then sends a confirmation response to the master database;
4) The master database waits for the confirmation character response from the slave database until all slave databases have responded;
5) The master database completes the commit transaction and commits it to the client and returns "commit OK".

A MySQL connection processing coroutine (obtained by conversion of a connection processing thread to coroutine) will repeat the above process over and over again to execute the SQL statement initiated by the client. As can be seen from the whole process, only the SQL instruction execution stage is computation-intensive, and the CPU occupancy rate is high at this time; the other stages are to initiate IO or wait for IO to complete, that is, 10-intensive load. Although the IO-intensive load itself consumes very little CPU, it needs to trigger a large number of coroutine swapping actions due to the need for frequent IO wait. If IO-intensive loads and computation-intensive loads are put into the same group of scheduling threads for execution, the frequent swapping in and out of IO-intensive loads will disrupt the scheduling rhythm of computation-intensive tasks, increase the scheduling burden, and reduce the overall performance. Because coroutines rely on the time slices of time-sharing multiplexing scheduling threads to achieve simulated parallelism, the scheduling thread also consumes CPU time to handle swapping in and out; therefore, the more CPU time the scheduling thread consumes on swapping in and out, the less CPU time is used to execute computing tasks.

In the embodiment, after the dynamic runtime library is loaded, the management of threads in all databases converts all threads into coroutines by default, resulting in different types of coroutines (such as IO coroutines for master-slave replication, coroutines for receiving response signals, etc.), as well as different types of loads in database commands, all being scheduled by the same batch of coroutine scheduling threads. Consequently, different types of coroutine loads are scheduled mixedly. IO-intensive loads need to conduct IO wait in the swapping out/swapping mode, thereby disrupting the scheduling rhythm of computation-intensive loads and increasing the burden of thread processing coroutines in swapping in and out.

To solve the above performance problem, the present disclosure provides another embodiment of a database thread pool control method, comprising the following steps of: loading a dynamic runtime library capable of replacing a thread with a coroutine in an operating system of a database to generate at least one coroutine scheduling thread, the coroutine scheduling thread being for scheduling at least one coroutine; dividing the at least one coroutine scheduling thread into an IO-intensive scheduling thread and a computation-intensive scheduling thread; receiving a request for connection sent by a client to the database; detecting whether the request for connection is a thread construction request for processing connection; in response to detecting that the request for connection is a thread construction request for processing connection, creating a coroutine corresponding to the request for connection, detecting whether the coroutine corresponding to the request for connection is in a state between a first state and a second state, wherein the first state being a state in which the coroutine is waiting for a data packet to execute a database command, the data packet has arrived, and the coroutine needs to be awakened, and the second state being a state in which the coroutine is in the computation-intensive scheduling thread and the coroutine initiates a specific write request to a specific file; if it is detected that the coroutine corresponding to the request for connection is in a state between the first state and the second state, scheduling the coroutine corresponding to the request for connection with the computation-intensive scheduling thread in the at least one coroutine scheduling thread; and if it is detected that the coroutine corresponding to the request for connection is not in a state between the first state and the second state, scheduling the coroutine corresponding to the request for connection with the IO-intensive scheduling thread in the at least one coroutine scheduling thread.

In the embodiment, the coroutine scheduling threads are divided into two groups: computation-intensive scheduling threads and IO-intensive scheduling threads, the computation-intensive scheduling threads are used for scheduling and executing computation-intensive loads, and the IO-intensive scheduling threads are used for scheduling and executing IO-intensive loads.

In the embodiment, at least one coroutine scheduling thread can be divided into IO-intensive scheduling threads and computation-intensive scheduling threads based on a preset division criterion, wherein the preset division criterion is: the ratio of the number of IO-intensive scheduling threads to the number of computation-intensive scheduling threads is a fixed value (e.g., 1:4). Optionally, the above-mentioned preset division criterion can also be: determine the type of database, and determine the ratio of the number of IO-intensive scheduling threads to the number of computation-intensive scheduling threads based on the type of database. For databases with more IO operations, the ratio of the number of IO-intensive scheduling threads can be set to a larger value in the setting of the division criterion; for databases with more computation operations, the ratio of the number of computation-intensive scheduling threads can be set to a larger value in the setting of the division criterion.

In the embodiment, the coroutine corresponding to the request for connection is a coroutine for executing the request for connection. The coroutine can be in different stages of executing the request for connection, for example, receiving database instructions, executing database instructions, committing instruction processing results to other libraries, and returning database instruction executing results to the client. Among them, the state between the first state and the second state belongs to the stage of executing database instructions. In this stage of executing database instructions, a large number of computation operations are required. By migrating the coroutine to the computation-intensive scheduling thread for scheduling can achieve separation from IO-intensive loads.

In the embodiment, the state between the first state and the second state is used for defining the stage from the point where an operation waiting for the data packet to execute the database command is about to be awakened to the point where a specific write operation to a specific file occurs. In the state where the coroutine is waiting for a data packet to execute a database command, the data packet has arrived, and the coroutine needs to be awakened, it is necessary to put the coroutine into the computation-intensive scheduling thread.

For the MySQL database, the state between the first state and the second state refers to a state in which the data of the SQL query packet has arrived, and the IO operation waiting for the SQL query packet is about to be awakened from the wait state. By monitoring the state between the first state and the second state, the coroutine in this state can be migrated to the computation-intensive scheduling thread. When the coroutine resumes, it is executed in the computation-intensive scheduling thread and starts to process the SQL query packet just received.

Taking the MySQL database as an example, the working principle of the performing subject running on the database thread pool control method disclosed in the present invention is explained as follows:
1) For a newly created connection, since the handshake confirmation and connection context initialization work (i.e., the connection creating stage) need to be performed, it is necessary to communicate back and forth with the client several times during the period, which is an IO-intensive operation. Therefore, the connection processing coroutine corresponding to the new connection needs to be processed by the IO-intensive scheduling thread, and the connection processing coroutine is placed in the IO-intensive scheduling thread, so that the IO-intensive scheduling thread schedules the coroutine corresponding to the new connection.
2) After the connection is established, the MySQL connection processing coroutine needs to wait for the receive operation to receive the SQL instruction data packet sent by the client (MySQL is implemented by poll waiting); when poll ends waiting (i.e., when there is a data packet to be received) and is about to wake up the connection processing coroutine, the connection processing coroutine can be migrated to the computation-intensive scheduling thread. During the SQL operation, the current coroutine always remains in the computation-intensive scheduling thread.
3) When the connection processing coroutine calls the write operation to start writing to the binlog file, it means that the connection processing coroutine begins to enter the master-slave synchronization and transaction commit stage (such as opening binlog group commit, which means that this coroutine is the "group leader"); at this time, before completing the commiting of a write file IO request and yielding the coroutine to enter the IO wait state, the current connection processing coroutine is migrated to the IO-intensive scheduling thread.

From binlog writing, binlog sending, ack waiting, and completing transaction commit to occurrence of new SQL instructions to receive, the current connection processing coroutine always remains in the IO-intensive scheduling thread.

Based on the above process 1)-3), repeating until the connection processing thread exits, the separation of IO-intensive load and computation-intensive load can be achieved.

In the embodiment, the logic of thread migration can be scheduled by dynamic runtime library callback interface injection. The specific logic is as follows:
First, assume that 40 coroutine scheduling threads are started when the dynamic runtime library is mounted; since the CPU occupancy rate of IO-intensive tasks is very low, the number of threads required is relatively small; the 32 scheduling threads with coroutine scheduling thread IDs from 0 to 31 are defined as computation-intensive scheduling threads, and the 8 scheduling threads with coroutine scheduling thread IDs from 32 to 39 are defined as IO-intensive scheduling threads.
Secondly, when migrating coroutines to different coroutine scheduling threads, the thread pool plugin needs to use a load balancing algorithm to balance the migrated coroutine scheduling threads to avoid load skew. Optionally, in the MySQL database, the hash value of the connection processing thread ID can be used as a selection factor for the scheduling thread to implement the load balancing algorithm.

Based on the above premise, the present disclosure only needs to implement a callback function for waking up the coroutine operation and a callback function for the write operation. These two callback functions can realize the coroutine group scheduling mechanism mentioned above.

When executing a file write operation, if it is determined that the current coroutine is writing to a binlog file, its scheduling thread ID is set to a value between 32 and 39 (i.e., IO-intensive). Before waking up the coroutine, if it is determined that the coroutine is about to enter the SQL instruction execution stage, its scheduling thread ID is set to a value between 0 and 31.

The database thread pool control method provided by the embodiment of the present disclosure can divert IO-intensive scheduling loads to dedicated IO scheduling threads by dividing the coroutine scheduling threads into two groups, thereby reducing the scheduling resource consumption of the computation-intensive scheduling threads and improving the concurrency performance of the database.

In some optional implementations disclosed, the above-mentioned the loading a dynamic runtime library capable of replacing a thread with a coroutine in an operating system of a database to generate at least one coroutine scheduling thread comprises:
in response to the database being unable to modify a source code and not having a connection control plugin mechanism, starting the database; loading and initializing a dynamic runtime library to generate at least one coroutine scheduling thread, the dynamic runtime library having a hook function for creating a thread, the hook function for creating a thread is used to replace a connection processing thread generated by a native runtime library of the database with the coroutine; and when the database is initialized, reloading the hook function for creating a thread, to determine whether a currently created thread is a connection processing thread with the hook function for creating a thread, and when the currently created thread is a connection processing thread, converting the connection processing thread into a coroutine.

In the embodiment, in the hook function for creating a thread, it is monitored whether the currently created thread is a connection processing thread. When the currently created thread is a connection processing thread, the coroutine context structure is used to replace the thread descriptor, and the current running thread or coroutine is marked by a global variable with a thread local constraint. The thread local storage information in the coroutine context structure is controlled by the synchronization control module. The synchronization control module is used to synchronize the thread local storage of the coroutine when the coroutine scheduling thread schedules the coroutine.

In the embodiment, the coroutine context structure (hereinafter referred to as the COCTX structure) is a structure for placing the coroutine context (hereinafter referred to as COCTX), which is used to maintain the context of the coroutine with a similar function of a thread descriptor (or thread handle). In order to provide compatibility with thread behavior, it is necessary to hook the library functions for creating threads and obtaining thread descriptors in the native runtime library, and replace the thread descriptor with COCTX. Taking Linux as an example, its thread descriptor is called "TCB", and its implementation is a structure called "pthread". The calls to create a thread and obtain a thread descriptor in Linux are:
pthread_create: create a thread and return a thread descriptor. The value of this thread descriptor is the address of the TCB structure. In this embodiment, the hook for creating a thread function is replaced by a pointer back to COCTX.
pthread_self: obtain the descriptor of the current thread, which is also replaced by a pointer to COCTX.

In the embodiment, a global TLS variable (global variable with thread-local constraints) can be used to obtain the context of the current coroutine, which is declared as follows:
extern_thread COCTX*_current_coctx;

In the embodiment, COCTX has the following 4 types:
Coroutine COCTX: corresponding to an actual coroutine;
Global COCTX: the _current_coctx of the main thread will be set to global COCTX, which will be created when the dynamic runtime library is just loaded;
Scheduler COCTX: each coroutine scheduling thread (that is, the thread running the coroutine) will have a default COCTX. If no coroutine is in the ready state or the intermediate state switching between two coroutines, the _current_coctx of the current thread will be set to scheduler COCTX;
Single COCTX: when creating a system native thread, a virtual COCTX will be created for it.

As mentioned above, the hook function of pthread_self actually returns the value of_current_coctx. In the program, by determining the type of the current COCTX, you can know which thread and running state it is currently in.

In the embodiment, the contents stored in the COCTX structure include: coroutine stack and TLS. The dynamic runtime library allocates an independent stack for each coroutine, so it can completely simulate the behavior of a thread (including the memory size allocated in the stack and the call stack depth).

If the coroutine cannot fully simulate the TLS mechanism of the thread, the coroutine will not be able to safely access variables with TLS constraints. In the embodiment, TLS control encapsulation is implemented through the synchronization control module (hereinafter referred to as co_tls). The capabilities provided by co_tls are crucial for "transparent" simulation of threads. Taking Linux as an example, the following two types of TLS are stored in its TCB: dtv and specific.

The co_tls disclosed in this disclosure supports specific: co_tls needs to maintain a data structure similar to the specific arrays in the TCB. When a newly created coroutine is swapped in for execution for the first time, the specific in the TCB of the scheduling thread to which it belongs will be copied. In addition, it is also necessary to hook the library function for managing specific. The library functions of Linux are listed above. There are also similar functions in Windows, namely: TIsAlloc, TlsFree, TlsGetValue, and TlsSetValue.

The co_tls disclosed in this disclosure supports dtv: Similarly, when a newly created coroutine is scheduled for execution for the first time, it is also necessary to copy the dtv in the TCB. However, unlike specific, the specific content in co_tls no longer needs to be synchronized with the TCB; but since other dynamic runtime libraries may be dynamically loaded at runtime, the dtv of co_tls needs to be incrementally synchronized with the dtv in the TCB. An incremental backup of the TCB dtv is stored in the scheduler COCTX to describe the incremental part of the dtv generated each time the dynamic runtime library is loaded. At the same time, it is necessary to hook the library function call for loading the dynamic runtime library (the library function is called dlopen in Linux, and corresponds to LoadLibrary in Windows). Taking Linux as an example, a data structure called "link_map" describes all dynamic runtime library information. Combining link_map and dtv incremental backup, the difference between the current coroutine and the dtv incremental can be parsed. For the merging of dtv incremental, a "lazy" synchronization solution is adopted, that is, when the coroutine is about to be swapped in, it is determined whether dtv needs to be synchronized. If dlopen is called in a coroutine, it is necessary to identify _current_coctx as a coroutine type in the hook of dlopen, and immediately synchronize dtv for the current coroutine.

In the embodiment, with a hook function for creating a thread, a coroutine that is completely consistent with the thread capability can be simulated. The switching process of the coroutine is as follows: First, in the initial state of the coroutine scheduling thread, _current_coctx is scheduler COCTX; then, when a coroutine needs to be swapped in (resume), check whether there is a difference between the coroutine and the dtv incremental backup (if there is, synchronization is required), and after completing the difference synchronization, set _current_coctx as the context of the current coroutine; finally, when the coroutine requires swapping out, restore _current_coctx to scheduler COCTX. The entire coroutine switching process is completely executed in user mode, without any form of interaction with the operating system, thereby maintaining the lightweight characteristics of the coroutine.

This embodiment implements pure user-mode coroutine TLS switching, while maintaining the lightweight characteristics of coroutine switching and maintaining the cross-coroutine security of TLS (taking into account both high performance and "transparent" virtualization).

In the method for generating a coroutine scheduling thread provided in this embodiment, when the database cannot modify the source code and does not have a connection control plugin mechanism, inject a dynamic runtime library with a hook function for creating a thread into the started database, and reload the hook function for creating a thread when the database is initialized, whereby the hook function for creating a thread can intercept the request for creating a connection processing thread and convert the connection processing thread into a coroutine. The method provided in the embodiment provides a reliable implementation method for converting a connection processing thread into a coroutine.

In some optional implementations disclosed, the above-mentioned loading a dynamic runtime library capable of replacing a thread with a coroutine in an operating system of a database to generate at least one coroutine scheduling thread, comprises: in response to the database having a connection control plugin mechanism, starting the database; loading and initializing a dynamic runtime library to generate at least one coroutine scheduling thread; initializing the database; loading and initializing a plugin to make the plugin receive a request for connection sent to the database, and when a thread construction request of the database is a request for processing the request for connection, controlling the hook function for creating a thread in the dynamic runtime library to work, the hook function for creating a thread being for determining whether a currently created thread is a connection processing thread, and when the currently created thread is a connection processing thread, converting the connection processing thread into a coroutine.

In this embodiment, the connection control plugin mechanism is a mechanism for extending the database function through a plugin without modifying the database, which is also a solution that does not modify the database source code.

In this embodiment, the plugin is a third-party device located in the database and the dynamic runtime library. The plugin can call the application interface of the dynamic runtime library and the application interface of the database. The plugin receives the request for connection and a thread construction request of the database by calling the application interface of the database, detects whether the thread construction request of the database is a request for processing the request for connection, and calls the application interface of the dynamic runtime library when the thread construction request of the database is a request for processing the request for connection. By calling the application interface of the dynamic runtime library, the hook function for creating a thread works, the hook function for creating a thread determines the connection processing thread, and converts the connection processing thread into a coroutine.

In this embodiment, the hook function for creating a thread is a function obtained by processing the function for creating a thread in the C library through the HOOK mechanism. The specific content of the hook function for creating a thread is as described in the above embodiment, which will not be repeated here.

In the method for generating a coroutine scheduling thread provided in the embodiment, when the database has a connection control plugin mechanism, connect the plugin, receive a request for connection through the plugin, and when the request for connection is a thread construction request for processing connection by the user, call the hook function for creating a thread of the dynamic runtime library to convert the connection processing thread into a coroutine. The method provided in this embodiment provides another reliable implementation method for converting the connection processing thread into a coroutine.

In some optional implementation modes of the present disclosure, if it is detected that the coroutine corresponding to the request for connection is not in a state between the first state and the second state, scheduling the coroutine corresponding to the request for connection with the IO-intensive scheduling thread in the at least one coroutine scheduling thread comprises: in response to the coroutine corresponding to the request for connection being in a stage of creating a connection, placing the coroutine in the current IO-intensive scheduling thread, the current IO-intensive scheduling thread being determined based on a load balancing algorithm; and in response to the coroutine corresponding to the request for connection being in a specific write operation to a specific file, and before completing the commit of a write specific file IO request and yielding the coroutine to enter into an IO wait, migrating the coroutine to the current IO-intensive scheduling thread.

In this embodiment, the write operation to a specific file or to a feature file may be different depending on the type of database. For example, for the MySQL database, the specific file is a binlog file; for the openGauss database, the specific file is an xlog file. For various specific files, various types of data have corresponding specific write operations.

In the method for scheduling coroutines provided by the optional implementation mode, migrate the coroutine to an IO-intensive scheduling thread when the coroutine in the database is in the stage of creating a connection; when the coroutine is in a specific write operation to a specific file and before completing the commit of a specific file IO request and the coroutine entering into an IO wait, the coroutine is migrated to an IO-intensive scheduling thread, thereby diverting IO-intensive tasks to a dedicated IO scheduling thread, reducing the resource consumption of the computation-intensive scheduling thread, and improving the concurrency performance of the database.

In some optional implementation modes of the present disclosure, the database is a MySQL database, and in response to the coroutine corresponding to the request for connection being in a specific write operation to a specific file, and before completing the commit of a write specific file IO request and yielding the coroutine to enter into an IO wait, the migrating the coroutine to the current IO-intensive scheduling thread, comprises:
in response to the coroutine corresponding to the request for connection being in a write operation to a binary log file, and before completing the commit of a write file IO request and yielding the coroutine to enter into an IO wait, migrating the coroutine to the current IO-intensive scheduling thread.

In the method for migrating coroutines provided in this embodiment, when the database is a MySQL database, migrate the coroutine to the current IO-intensive scheduling thread based on the write operation to a specific binary log file in the MySQL database, which can provide a reliable implementation mode for allocating coroutines of the MySQL database.

In some embodiments of the present disclosure, the database thread pool control method further comprises: detecting whether there is a coroutine for driving batch commit in the IO-intensive scheduling thread; and if there is a coroutine for driving batch commit in the IO-intensive scheduling thread, migrating the coroutine awakened by the coroutine for driving batch commit to the IO-intensive scheduling thread, the IO-intensive scheduling thread to which the coroutine awakened by the coroutine for driving batch commit is migrated being determined based on a load balancing algorithm.

In this embodiment, a coroutine wakeup callback function can be added to the dynamic runtime library, and the callback function has corresponding judgment logic that if the coroutine that is executing the operation of waking up other coroutines is in the IO-intensive scheduling thread itself, the coroutine awakened by it also needs to be migrated to the IO-intensive scheduling thread.

In the database thread pool control method provided in the embodiment, if there is a coroutine for driving batch commit in the IO-intensive scheduling thread, migrate the coroutine awakened by the coroutine for driving batch commit to the IO-intensive scheduling thread, which can improve the efficiency of coroutine scheduling.

In some optional implementation modes of the present disclosure, the database is a MySQL and a database in which a group commit is started, and the detecting whether there is a coroutine for driving batch commit in the IO-intensive scheduling thread comprises: detecting whether the IO-intensive scheduling thread has a group leader coroutine driving a group commit process for writing to the binary log file; and wherein if there is a coroutine for driving batch commit in the IO-intensive scheduling thread, migrating the coroutine awakened by the coroutine for driving batch commit to the IO-intensive scheduling thread, comprises: if it is detected that there is a group leader coroutine for a write operation to the binary log file, migrating a group member coroutine awakened by the group leader coroutine to the IO-intensive scheduling thread, the IO-intensive scheduling thread to which each group member coroutine is migrated being determined based on the load balancing algorithm.

In this embodiment, in the IO-intensive task, only the group leader coroutine committed by the binary log file group will wake up all other tasks in the commit group after receiving the confirmation message from the slave library; at this time, the awakened task must also be in the commit state, and therefore needs to be switched to the IO-intensive scheduling thread.

In the method for migrating coroutines provided in this embodiment, when the database is a MySQL database, determine a group leader coroutine based on the write operation to a specific binary log file in the MySQL database, and migrate the group member coroutines awakened by the group leader coroutine to the current IO-intensive scheduling thread, thereby providing a reliable implementation mode for allocating group member coroutines of the MySQL database.

Further referring to FIG. 4, as an implementation of the database thread pool control method shown in the above figures, the present disclosure provides an embodiment of a database thread pool control apparatus, which corresponds to the method embodiment shown in FIG. 1, and can be specifically applied to various electronic devices.

As shown in FIG. 4, the embodiment of the present disclosure provides database thread pool control apparatus 400, comprising: loading unit 401, receiving unit 402, detecting unit 403, and creating unit 404, wherein loading unit 401 can be configured to load a dynamic runtime library capable of replacing a thread with a coroutine in an operating system of a database to generate at least one coroutine scheduling thread, the at least one coroutine scheduling thread being for scheduling at least one coroutine; receiving unit 402 can be configured to receive a request for connection sent by a client to the database; detecting unit 403 can be configured to detect whether a request for creating a new thread in the database is a request for processing the request for connection; creating unit 404 can be configured to in response to detecting that the request for creating a new thread in the database is a request for processing the request for connection, create a coroutine corresponding to the request for connection, and schedule the coroutine with the at least one coroutine scheduling thread to complete an access task corresponding to the request for connection.

In this embodiment, in database thread pool control apparatus 400, the specific processing of loading unit 401, receiving unit 402, detecting unit 403, and creating unit 404 and the technical effects brought by them can refer to step 101, step 102, step 103, and step 104 in the corresponding embodiment of FIG. 1 respectively.

In some embodiments, loading unit 401 is configured to: in response to the database being unable to modify a source code and not having a connection control plugin mechanism, start the database; load and initialize a dynamic runtime library to generate at least one coroutine scheduling thread, the dynamic runtime library having a hook function for creating a thread, the hook function for creating a thread is used to replace a connection processing thread generated by a native runtime library of the database with the coroutine; when the database is initialized, reload the hook function for creating a thread, to determine whether a currently created thread is a connection processing thread with the hook function for creating a thread, and when the currently created thread is a connection processing thread, convert the connection processing thread into a coroutine.

In some embodiments, loading unit 401 is configured to: in response to the database having a connection control plugin mechanism, starting the database; load and initialize a dynamic runtime library to generate at least one coroutine scheduling thread, initialize the database; load and initialize a plugin to make the plugin receive a request for connection sent to the database, and when a thread construction request of the database is a request for processing the request for connection, control the hook function for creating a thread in the dynamic runtime library to work, the hook function for creating a thread being for determining whether a currently created thread is a connection processing thread, and when the currently created thread is a connection processing thread, convert the connection processing thread into a coroutine.

In some embodiments, the apparatus further comprises: a dividing unit (not shown in the figure) configured to divide the at least one coroutine scheduling thread into an IO-intensive scheduling thread and a computation-intensive scheduling thread; wherein the creating unit 404 is further configured to: determine whether the coroutine corresponding to the request for connection is in a state between a first state and a second state, wherein, the first state being a state in which the coroutine is waiting for a data packet to execute a database command, the data packet has arrived, and the coroutine needs to be awakened; and the second state being a state in which the coroutine is in the computation-intensive scheduling thread and the coroutine initiates a specific write request to a specific file; if it is detected that the coroutine corresponding to the request for connection is in a state between the first state and the second state, schedule the coroutine corresponding to the request for connection with the computation-intensive scheduling thread in the at least one coroutine scheduling thread; and if it is detected that the coroutine corresponding to the request for connection is not in a state between the first state and the second state, schedule the coroutine corresponding to the request for connection with the IO-intensive scheduling thread in the at least one coroutine scheduling thread.

In some embodiments, the creating unit 404 is further configured to: in response to the coroutine corresponding to the request for connection being in a stage of creating a connection, placing the coroutine in the current IO-intensive scheduling thread, the current IO-intensive scheduling thread being determined based on a load balancing algorithm; and in response to the coroutine corresponding to the request for connection being in a specific write operation to a specific file, and before completing the commit of a write specific file IO request and yielding the coroutine to enter into an IO wait, migrating the coroutine to the current IO-intensive scheduling thread.

In some embodiments, the database is a MySQL database, and the creating unit 404 is further configured to: in response to the coroutine corresponding to the request for connection being in a write operation to a binary log file, and before completing the commit of a write file IO request and yielding the coroutine to enter into an IO wait, migrate the coroutine to the current IO-intensive scheduling thread.

In some embodiments, the apparatus further comprises: a batch drive unit (not shown in the figure) configured to detect whether there is a coroutine for driving batch commit in the IO-intensive scheduling thread; and if there is a coroutine for driving batch commit in the IO-intensive scheduling thread, migrate the coroutine awakened by the coroutine for driving batch commit to the 10-intensive scheduling thread, the IO-intensive scheduling thread to which the coroutine awakened by the coroutine for driving batch commit is migrated being determined based on a load balancing algorithm.

In some embodiments, the database is a MySQL and a database in which a group commit is started, and the batch drive unit is further configured to: detect whether the IO-intensive scheduling thread has a group leader coroutine driving a group commit process for a write operation to the binary log file; if it is detected that there is a group leader coroutine for a write operation to the binary log file, migrate a group member coroutine awakened by the group leader coroutine to the 10-intensive scheduling thread, the IO-intensive scheduling thread to which each group member coroutine is migrated being determined based on the load balancing algorithm.

The database thread pool control device provided by the embodiment of the present disclosure, first, loading unit 401 loads a dynamic runtime library capable of replacing a thread with a coroutine in an operating system of a database to generate at least one coroutine scheduling thread, the coroutine scheduling thread being for scheduling at least one coroutine; secondly, receiving unit 402 receives a request for connection sent by a client to the database; thirdly, detecting unit 403 detects whether a request for creating a new thread in the database is a request for processing the request for connection; finally, creating unit 404, in response to detecting that the request for creating a new thread in the database is a request for processing the request for connection, creates a coroutine corresponding to the request for connection, and schedule the coroutine with the at least one coroutine scheduling thread to complete an access task corresponding to the request for connection. Therefore, the present disclosure transparently replaces the connection processing thread for processing connections in the database with a coroutine by dynamic runtime library injection, and the created coroutine corresponding to the request for connection runs in the form of time-sharing call. When a time-consuming operation such as suspension and wait occurs in a coroutine, the current coroutine scheduling thread can be actively yielded, and the coroutine scheduling thread can be replaced by another executable coroutine, which can solve the problem of increased delay of low-priority tasks and jitter of task response speed, and improve the concurrency performance of the database.

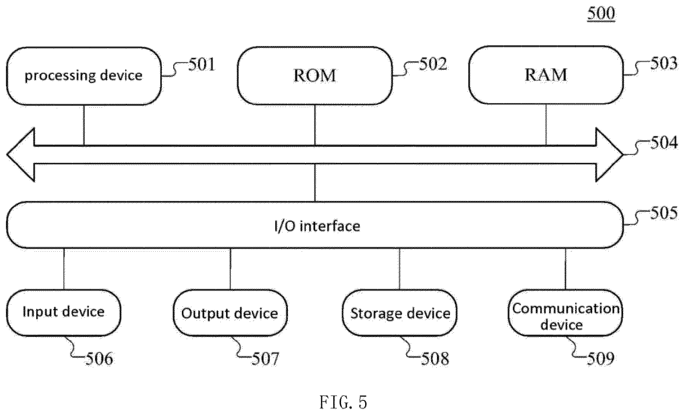

Referring to FIG. 5 below, a schematic diagram of the structure of electronic device 500 suitable for implementing an embodiment of the present disclosure is shown.

As shown in FIG. 5, electronic device 500 may include processing device (e.g., a central processing unit, a graphics processing unit, etc.) 501, which may perform various appropriate actions and processes according to a program stored in read-only memory (ROM) 502 or program loaded from a storage device 508 into random access memory (RAM) 503. Various programs and data required for the operation of electronic device 500 are also stored in RAM 503. Processing device 501, ROM 502, and RAM 503 are connected to each other via bus 504. Input/output (I/O) interface 505 is also connected to the bus 504.

Typically, the following devices may be connected to I/O interface 505: input device 506 including, for example, a touch screen, a touchpad, a keyboard, a mouse, etc.; an output device 507 including, for example, a liquid crystal display (LCD), a speaker, a vibrator, etc.; storage device 508 including, for example, a magnetic tape, a hard disk, etc.; and communication device 509. Communication device 509 may allow electronic device 500 to communicate wirelessly or wired with other devices to exchange data. Although FIG. 5 shows electronic device 500 having various devices, it should be understood that it is not required to implement or have all the devices shown. More or fewer devices may be implemented or provided instead. Each box shown in FIG. 5 may represent one device, or may represent multiple devices as required.

In particular, according to an embodiment of the present disclosure, the process described above with reference to the flowchart may be implemented as a computer software program. For example, an embodiment of the present disclosure includes a computer program product, which includes a computer program carried on a computer-readable medium, the computer program containing program code for executing the method shown in the flowchart. In such an embodiment, the computer program may be downloaded and installed from a network through communication device 509, or installed from storage device 508, or installed from ROM 502. When the computer program is executed by processing device 501, the above functions defined in the method of the embodiment of the present disclosure are executed.

It should be noted that the computer-readable medium of the embodiment of the present disclosure may be a computer-readable signal medium or a computer-readable storage medium or any combination of the above two. The computer-readable storage medium may be, for example, but not limited to, an electrical, magnetic, optical, electromagnetic, infrared, or semiconductor system, device or device, or any combination of the above. More specific examples of computer-readable storage media may include, but are not limited to: an electrical connection with one or more wires, a portable computer disk, a hard disk, a random access memory (RAM), a read-only memory (ROM), an erasable programmable read-only memory (EPROM or flash memory), an optical fiber, a portable compact disk read-only memory (CD-ROM), an optical storage device, a magnetic storage device, or any suitable combination of the above. In the embodiment of the present disclosure, the computer-readable storage medium may be any tangible medium containing or storing a program, which may be used by or in combination with an instruction execution system, device or device. In the embodiment of the present disclosure, the computer-readable signal medium may include a data signal propagated in a baseband or as part of a carrier wave, in which a computer-readable program code is carried.

This propagated data signal may take a variety of forms, including but not limited to electromagnetic signals, optical signals, or any suitable combination of the above. The computer-readable signal medium may also be any computer-readable medium other than a computer-readable storage medium, which may send, propagate or transmit a program for use by or in combination with an instruction execution system, device or device. The program code contained on the computer-readable medium may be transmitted by any appropriate medium, including but not limited to: wires, optical cables, RF (Radio Frequency), etc., or any suitable combination of the above.

The above-mentioned computer-readable medium may be contained in the server; or it may exist alone without being assembled into the server. The above-mentioned computer-readable medium carries one or more programs, which, when executed by a server, cause the server to: load a dynamic runtime library capable of replacing a thread with a coroutine in an operating system of a database to generate at least one coroutine scheduling thread, the coroutine scheduling thread being for scheduling at least one coroutine; receive a request for connection sent by a client to the database; detect whether a request for creating a new thread in the database is a request for processing the request for connection; and in response to detecting that the request for creating a new thread in the database is a request for processing the request for connection, create a coroutine corresponding to the request for connection, and schedule the coroutine with the at least one coroutine scheduling thread to complete an access task corresponding to the request for connection.

Computer program code for performing the operations of embodiments of the present disclosure may be written in one or more programming languages or a combination thereof, including object-oriented programming languages, such as Java, Smalltalk, C++, and conventional procedural programming languages, such as "C" or similar programming languages. The program code may be executed entirely on a user's computer, partially on a user's computer, as a separate software package, partially on a user's computer and partially on a remote computer, or entirely on a remote computer or server. In cases involving a remote computer, the remote computer may be connected to the user's computer via any type of network, including a local area network (LAN) or a wide area network (WAN), or may be connected to an external computer (e.g., via the Internet using an Internet service provider).

The flowcharts and block diagrams in the accompanying drawings illustrate the possible architecture, functions and operations of the systems, methods and computer program products according to various embodiments of the present disclosure. In this regard, each box in the flowchart or block diagram may represent a module, a program segment, or a portion of a code, which contains one or more executable instructions for implementing the specified logical functions. It should also be noted that in some alternative implementations, the functions marked in the box may also occur in a different order than that marked in the accompanying drawings. For example, two boxes represented in succession can actually be executed substantially in parallel, and they can sometimes be executed in the opposite order, depending on the functions involved. It should also be noted that each box in the block diagram and/or flowchart, and the combination of boxes in the block diagram and/or flowchart, can be implemented with a dedicated hardware-based system that performs the specified function or operation, or can be implemented with a combination of dedicated hardware and computer instructions.

The units involved in the embodiments described in the present disclosure can be implemented by software or by hardware. The described units can also be set in a processor, for example, can be described as: a processor, including a loading unit, a receiving unit, a detection unit, and a creation unit. Among them, the names of these units do not constitute a limitation on the unit itself in some cases. For example, the loading unit can also be described as a unit "configured to load a dynamic runtime library capable of replacing a thread with a coroutine in an operating system of a database to generate at least one coroutine scheduling thread".

The above description is only a preferred embodiment of the present disclosure and an explanation of the technical principles used. Those skilled in the art should understand that the scope of the invention involved in the embodiments of the present disclosure is not limited to the technical solutions formed by a specific combination of the above-mentioned technical features, but also should cover other technical solutions formed by any combination of the above-mentioned technical features or their equivalent features without departing from the above-mentioned inventive concept. For example, the above-mentioned features are replaced with the technical features with similar functions disclosed in the embodiments of the present disclosure (but not limited to) and formed by mutual substitution.

## Claims

1. A database thread pool control method comprising:
loading a dynamic runtime library capable of replacing a thread with a coroutine in an operating system of a database to generate at least one coroutine scheduling thread, the coroutine scheduling thread being for scheduling at least one coroutine;
receiving a request for connection sent by a client to the database;
detecting whether a request for creating a new thread in the database is a request for processing the request for connection; and
in response to detecting that the request for creating a new thread in the database is a request for processing the request for connection, creating a coroutine corresponding to the request for connection, and scheduling the coroutine with the at least one coroutine scheduling thread to complete an access task corresponding to the request for connection.

2. The method according to claim 1, wherein the loading a dynamic runtime library capable of replacing a thread with a coroutine in an operating system of a database to generate at least one coroutine scheduling thread comprises:
in response to the database being unable to modify a source code and not having a connection control plugin mechanism, starting the database;
loading and initializing a dynamic runtime library to generate at least one coroutine scheduling thread, the dynamic runtime library having a hook function for creating a thread, the hook function for creating a thread is used to replace a connection processing thread generated by a native runtime library of the database with the coroutine; and
when the database is initialized, reloading the hook function for creating a thread, to determine whether a currently created thread is a connection processing thread with the hook function for creating a thread, and when the currently created thread is a connection processing thread, converting the connection processing thread into a coroutine.

3. The method according to claim 1, wherein the loading a dynamic runtime library capable of replacing a thread with a coroutine in an operating system of a database to generate at least one coroutine scheduling thread comprises:
in response to the database having a connection control plugin mechanism, starting the database;
loading and initializing the dynamic runtime library to generate at least one coroutine scheduling thread;
initializing the database;
loading and initializing a plugin to make the plugin receive a request for connection sent to the database, and when a thread construction request of the database is a request for processing the request for connection, controlling the hook function for creating a thread in the dynamic runtime library to work, the hook function for creating a thread being for determining whether a currently created thread is a connection processing thread, and when the currently created thread is a connection processing thread, converting the connection processing thread into a coroutine.

4. The method according to any one of claims 1-3, further comprising:
dividing the at least one coroutine scheduling thread into an IO-intensive scheduling thread and a computation-intensive scheduling thread;
wherein the scheduling the coroutine with the at least one coroutine scheduling thread to complete an access task corresponding to the request for connection comprises:
detecting whether the coroutine corresponding to the request for connection is in a state between a first state and a second state, wherein, the first state being a state in which the coroutine is waiting for a data packet to execute a database command, the data packet has arrived, and the coroutine needs to be awakened; and the second state being a state in which the coroutine is in the computation-intensive scheduling thread and the coroutine initiates a specific write request to a specific file;
if it is detected that the coroutine corresponding to the request for connection is in a state between the first state and the second state, scheduling the coroutine corresponding to the request for connection with the computation-intensive scheduling thread in the at least one coroutine scheduling thread; and
if it is detected that the coroutine corresponding to the request for connection is not in a state between the first state and the second state, scheduling the coroutine corresponding to the request for connection with the IO-intensive scheduling thread in the at least one coroutine scheduling thread.

5. The method according to claim 4, wherein if it is detected that the coroutine corresponding to the request for connection is not in a state between the first state and the second state, scheduling the coroutine corresponding to the request for connection with the IO-intensive scheduling thread in the at least one coroutine scheduling thread comprises:
in response to the coroutine corresponding to the request for connection being in a stage of creating a connection, placing the coroutine in the current IO-intensive scheduling thread, the current IO-intensive scheduling thread being determined based on a load balancing algorithm; and
in response to the coroutine corresponding to the request for connection being in a specific write operation to a specific file, and before completing a commit of a write specific file IO request and yielding the coroutine to enter into an IO wait, migrating the coroutine to the current IO-intensive scheduling thread.

6. The method according to claim 5, wherein the database is a MySQL database, and in response to the coroutine corresponding to the request for connection being in a specific write operation to a specific file, and before completing the commit of a write specific file IO request and yielding the coroutine to enter into an IO wait, the migrating the coroutine to the current IO-intensive scheduling thread, comprises:
in response to the coroutine corresponding to the request for connection being in a write operation to a binary log file, and before completing the commit of a write file IO request and yielding the coroutine to enter into an IO wait, migrating the coroutine to the current IO-intensive scheduling thread.

7. The method according to claim 5, further comprising:
detecting whether there is a coroutine for driving batch commit in the IO-intensive scheduling thread; and
if there is a coroutine for driving batch commit in the IO-intensive scheduling thread, migrating the coroutine awakened by the coroutine for driving batch commit to the IO-intensive scheduling thread, the IO-intensive scheduling thread to which the coroutine awakened by the coroutine for driving batch commit is migrated being determined based on a load balancing algorithm.

8. The method according to claim 7, wherein the database is a MySQL and a database in which a group commit is started, and the detecting whether there is a coroutine for driving batch commit in the IO-intensive scheduling thread comprises:
detecting whether the IO-intensive scheduling thread has a group leader coroutine driving a group commit process for a write operation to the binary log file; and
wherein if there is a coroutine for driving batch commit in the IO-intensive scheduling thread, migrating the coroutine awakened by the coroutine for driving batch commit to the IO-intensive scheduling thread comprises:
if it is detected that there is a group leader coroutine for a write operation to the binary log file, migrating a group member coroutine awakened by the group leader coroutine to the IO-intensive scheduling thread, the IO-intensive scheduling thread to which each group member coroutine is migrated being determined based on the load balancing algorithm.

9. A database thread pool control apparatus comprising:
a loading unit configured to load a dynamic runtime library capable of replacing a thread with a coroutine in an operating system of a database to generate at least one coroutine scheduling thread, the coroutine scheduling thread being for scheduling at least one coroutine;
a receiving unit configured to receive a request for connection sent by a client to the database;
a detecting unit configured to detect whether a request for creating a new thread in the database is a request for processing the request for connection; and
a creating unit configured to, in response to detecting that the request for creating a new thread in the database is a request for processing the request for connection, create a coroutine corresponding to the request for connection, and schedule the coroutine with the at least one coroutine scheduling thread to complete an access task corresponding to the request for connection.

10. The apparatus according to claim 9, wherein the loading unit is further configured to:
in response to the database being unable to modify a source code and not having a connection control plugin mechanism, start the database;
load and initialize a dynamic runtime library to generate at least one coroutine scheduling thread, the dynamic runtime library having a hook function for creating a thread, the hook function for creating a thread is used to replace a connection processing thread generated by a native runtime library of the database with the coroutine; and
when the database is initialized, reload the hook function for creating a thread, to determine whether a currently created thread is a connection processing thread with the hook function for creating a thread, and when the currently created thread is a connection processing thread, convert the connection processing thread into a coroutine.

11. The apparatus according to claim 9, wherein the loading unit is further configured to:
in response to the database having a connection control plugin mechanism, start the database;
load and initialize the dynamic runtime library to generate at least one coroutine scheduling thread;
initialize the database;
load and initialize a plugin to make the plugin receive a request for connection sent to the database, and when a thread construction request of the database is a request for processing the request for connection, control the hook function for creating a thread in the dynamic runtime library to work, the hook function for creating a thread being for determining whether a currently created thread is a connection processing thread, and when the currently created thread is a connection processing thread, convert the connection processing thread into a coroutine.

12. The apparatus according to any one of claims 9-10, further comprising:
a dividing unit configured to divide the at least one coroutine scheduling thread into an IO-intensive scheduling thread and a computation-intensive scheduling thread;
wherein the creating unit is further configured to:
determine whether the coroutine corresponding to the request for connection is in a state between a first state and a second state, wherein, the first state being a state in which the coroutine is waiting for a data packet to execute a database command, the data packet has arrived, and the coroutine needs to be awakened; and the second state being a state in which the coroutine is in the computation-intensive scheduling thread and the coroutine initiates a specific write request to a specific file;
if it is detected that the coroutine corresponding to the request for connection is in a state between the first state and the second state, schedule the coroutine corresponding to the request for connection with the computation-intensive scheduling thread in the at least one coroutine scheduling thread; and
if it is detected that the coroutine corresponding to the request for connection is not in a state between the first state and the second state, schedule the coroutine corresponding to the request for connection with the IO-intensive scheduling thread in the at least one coroutine scheduling thread.

13. The apparatus according to claim 12, wherein the creating unit is further configured to:
in response to the coroutine corresponding to the request for connection being in a stage of creating a connection, placing the coroutine in the current IO-intensive scheduling thread, the current 10-intensive scheduling thread being determined based on a load balancing algorithm; and
in response to the coroutine corresponding to the request for connection being in a specific write operation to a specific file, and before completing a commit of a write specific file IO request and yielding the coroutine to enter into an IO wait, migrating the coroutine to the current IO-intensive scheduling thread.

14. The apparatus according to claim 13, wherein the database is a MySQL database, and the creating unit is further configured to: in response to the coroutine corresponding to the request for connection being in a write operation to a binary log file, and before completing the commit of a write file IO request and yielding the coroutine to enter into an IO wait, migrate the coroutine to the current IO-intensive scheduling thread.

15. The apparatus according to claim 13, further comprising:
a batch drive unit configured to detect whether there is a coroutine for driving batch commit in the IO-intensive scheduling thread; and if there is a coroutine for driving batch commit in the IO-intensive scheduling thread, migrate the coroutine awakened by the coroutine for driving batch commit to the IO-intensive scheduling thread, the 10-intensive scheduling thread to which the coroutine awakened by the coroutine for driving batch commit is migrated being determined based on a load balancing algorithm.

16. The apparatus according to claim 15, wherein the database is a MySQL and a database in which a group commit is started, and the batch drive unit is further configured to:
detect whether the IO-intensive scheduling thread has a group leader coroutine driving a group commit process for a write operation to the binary log file;
if it is detected that there is a group leader coroutine for a write operation to the binary log file, migrate a group member coroutine awakened by the group leader coroutine to the IO-intensive scheduling thread, the IO-intensive scheduling thread to which each group member coroutine is migrated being determined based on the load balancing algorithm.

17. An electronic device, comprising:
one or more processors;
a storage device, on which one or more computer programs are stored, wherein
the one or more computer programs, when executed by the one or more processors, cause the one or more processors to implement the method according to one of claims 1-8.

18. A non-transitory computer-readable medium, on which a computer program is stored, wherein the computer program, when executed by a processor, implements the method according to any one of claims 1-8.
